Europäisches Patentamt

European Patent Office

Office européen des brevets

(19)

(11) Veröffentlichungsnummer : **0 055 352**
**B1**

(12) **EUROPÄISCHE PATENTSCHRIFT**

(45) Veröffentlichungstag der Patentschrift :
26.03.86

(21) Anmeldenummer : 81108788.1

(22) Anmeldetag : 23.10.81

(51) Int. Cl.⁴ : **G 01 B  7/02**, G 01 B  7/30, H 03 K 17/60, H 03 K 17/78

(54) Absolute Längen- oder Winkelmesseinrichtung.

(30) Priorität : 27.12.80 DE 3049262

(43) Veröffentlichungstag der Anmeldung :
07.07.82 Patentblatt 82/27

(45) Bekanntmachung des Hinweises auf die Patenterteilung : 26.03.86 Patentblatt 86/13

(84) Benannte Vertragsstaaten :
**AT CH FR GB IT LI NL SE**

(56) Entgegenhaltungen :
DE-A- 1 762 444
DE-A- 2 340 978
DE-A- 2 848 932

(73) Patentinhaber : **Dr. Johannes Heidenhain GmbH Nansenstrasse 17
D-8225 Traunreut (DE)**

(72) Erfinder : **Schmitt, Walter Hochgernstrasse 22
D-8225 Traunreut (DE)**

## Beschreibung

Die Erfindung betrifft eine absolute Längen- oder Winkelmeßeinrichtung gemäß dem Oberbegriff des Anspruchs 1.

In der DE-A-23 40 978 ist ein Sender für eine Wechsellichtschranke beschrieben, bei dem ein Widerstand in Reihe mit einer Parallelschaltung aus einem Kondensator und einer Leuchtdiode verbunden ist. Aufgrund des Umschaltens eines Transistors wird ein Thyristor eingeschaltet, so daß die Leuchtdiode Licht aussendet. Über den Thyristor fließt solange ein Strom, bis der Kondensator nahezu vollständig entladen ist; der Kondensator veranlaßt somit das periodische Ausschalten der Leuchtdiode. Das periodische Einschalten der Leuchtdiode wird durch einen weiteren Kondensator bewirkt.

Bei absoluten Längen- oder Winkelmeßeinrichtungen (Codemeßeinrichtungen) ist es üblich, zur Abfrage der absoluten Positionswerte den Codegeber zur Stromersparnis nur kurzzeitig einzuschalten, wobei es bekannt ist, diese Einschaltung von einem in der Codemeßeinrichtung vorhandenen Rechner vornehmen zu lassen. Sind im Codegeber die elektrischen Verbraucher beispielsweise in Form von lichtemittierenden Dioden über lange Leitungen an ein Stromversorgungsgerät angeschlossen, so wird diesen Dioden, insbesondere bei hohen Schaltfrequenzen, ein Kondensator parallel geschaltet. Die Dioden haben bei der kurzzeitigen Einschaltung des Codegebers einen relativ hohen Strombedarf, so daß die Stromquelle und die Stromversorgungsleitungen entsprechend ausgelegt sein müssen.

Der Erfindung liegt die Aufgabe zugrunde, bei einer Codemeßeinrichtung eine Schaltungsanordnung zur Stromversorgung von Verbrauchern der oben genannten Gattung anzugeben, die eine wesentliche Reduzierung der Belastung der Stromquelle und der Versorgungsleitungen ermöglicht.

Diese Aufgabe wird bei einer Vorrichtung der eingangs genannten Art durch die kennzeichnenden Merkmale des Anspruchs 1 gelöst.

Die mit der Erfindung erzielten Vorteile bestehen insbesondere darin, daß die Stromquelle und die Versorgungsleitungen schwächer dimensioniert werden können, so daß sich eine gewisse Kostensenkung ergibt; des weiteren verringert sich der Wechselstromanteil der Gleichstromversorgung.

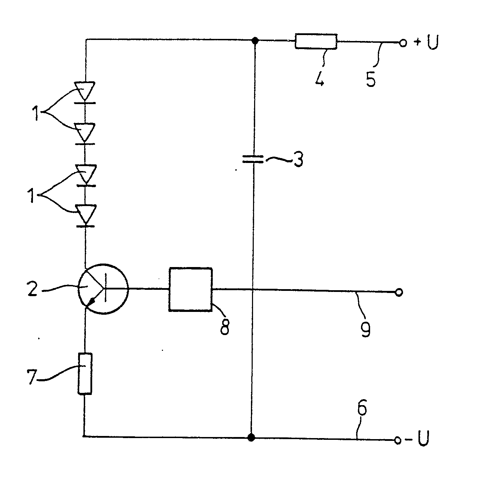

Ein Ausführungsbeispiel der Erfindung ist in der Zeichnung dargestellt und wird im folgenden näher erläutert.

In der Figur ist in einem nicht gezeigten Codegeber einer Codemeßeinrichtung eine Reihenschaltung aus lichtemittierenden Dioden 1 und einem Schalttransistor 2 parallel zu einem Kondensator 3 geschaltet. Diese Parallelschaltung ist über einen Widerstand 4 und eine Leitung 5 an eine externe Versorgungsspannung +U und über eine Leitung 6 an eine externe Versorgungsspannung −U angeschlossen.

Die Basis des Schalttransistors 2, dessen Kollektor mit der Kathode der Dioden 1 und dessen Emitter über einen Widerstand 7 mit der Leitung 6 verbunden sind, wird über ein Zeitglied 8 und eine Steuerleitung 9 von einem in der Codemeßeinrichtung vorhandenen, nicht gezeigten Rechner zur Abfrage der absoluten Positionswerte angesteuert; das Zeitglied 8 dient der optimalen Ansteuerung der Basis des Schalttransistors 2 unabhängig von der Länge der vom Rechner gelieferten Steuersignale.

Durch die erfindungsgemäße Schaltungsanordnung werden kurzzeitige große Stromimpulse für die Dioden 1, die der Beleuchtung eines nicht gezeigten Codemaßstabs dienen, in kleine langdauernde Stromimpulse transformiert. Durch eine große Zeitkonstante des RC-Gliedes 3, 4 kann die Stromänderung sehr klein gemacht werden, so daß die Leitungen 5, 6 und die nicht gezeigte Stromquelle nur mit etwas mehr als dem zeitlichen Mittelwert der Stromaufnahme belastet werden.

Die Arbeitsweise der obigen Schaltungsanordnung ist folgende: Die kurzzeitige (z. B. 100 μs) große (z. B. 100 mA) Stromentnahme der Dioden 1 bei der Ansteuerung des Schalttransistors 2 führt zu einer Spannungsänderung $\Delta Uc = I \cdot \Delta t/C$ am Kondensator 3. Diese Spannungsänderung $\Delta Uc$ ergibt über dem Widerstand 4 eine Stromänderung $\Delta I = \Delta Uc/R$.

Die Reihenschaltung aus Schalttransistor 2 und Dioden 1 parallel zum Kondensator 3 ermöglicht darüberhinaus ein schnelles Schalten der Versorgungsspannung und ein verzögerungsfreies Ein- und Ausschalten der Dioden 1. Der Widerstand 4 bewirkt zusätzlich eine Strombegrenzung bei einer fehlerhaften Ansteuerung des Schalttransistors 2. Der Schalttransistor 2 wirkt zusammen mit dem Widerstand 7 als schaltbare Konstantstromquelle für die Dioden 1.

## Patentansprüche

1. Absolute Längen- oder Winkelmeßeinrichtung mit einer Codemeßteilung, die von einer elektrischen Abtasteinheit abgetastet wird, die eine Schaltungsanordnung zur Stromversorgung von Verbrauchern (1), insbesondere einer Beleuchtungseinheit für die Codemeßteilung, mit geringer Einschaltdauer aufweist, wobei parallel zu den Verbrauchern (1) wenigstens ein Kondensator (3) geschaltet ist, dadurch gekennzeichnet, daß zur Transformierung kurzzeitiger hoher Stromimpulse in langdauernde kleine Stromimpulse ein Widerstand (4) in Reihe mit einer Parallelschaltung, bestehend aus dem Kondensator (3) und aus einer Reihenschaltung aus den Verbrauchern (1) und einem Schaltelement (2), verbunden ist und daß das Schaltelement (2) über ein Zeitglied (8) von einem Rechner ansteuerbar ist.

2. Einrichtung nach Anspruch 1, dadurch ge-

kennzeichnet, daß das Schaltelement (2) mit einem Widerstand (7) eine schaltbare Konstantstromquelle bildet.

3. Einrichtung nach Anspruch 1, dadurch gekennzeichnet, daß die Verbraucher (1) aus lichtemittierenden Dioden bestehen.

4. Einrichtung nach den Ansprüchen 1 oder 2, dadurch gekennzeichnet, daß das Schaltelement (2) von einem Transistor gebildet wird.

## Claims

1. Absolute length or angle measuring device with a code measuring graduation, which is scanned by an electrical scanning unit, which has a circuit arrangement for the power supply of consumers (1), in particular of a lighting unit for the code measuring graduation, of low duty cycle, at least one capacitor (3) being connected parallel to the consumers (1), characterised in that, for transformation of short-time high current pulses into longlasting small current pulses, a resistor (4) is connected in series with a parallel circuit, consisting of the capacitor (3) and a series circuit of the consumers (1) and a switching element (2), and in that the switching element (2) can be triggered by a computer via a timing element (8).

2. Device according to Claim 1, characterised in that the switching element (2) forms with a resistor (7) a switchable constant-current source.

3. Device according to Claim 1, characterised in that the consumers (1) consist of light-emitting diodes.

4. Device according to Claims 1 or 2, characterised in that the switching element (2) is formed by a transistor.

## Revendications

1. Dispositif de mesure absolue de longueurs ou d'angles, avec une graduation de codage qui est balayée par une unité de balayage électrique, laquelle présente un montage pour l'alimentation en courant de charges (1), et notamment d'une unité d'éclairage de la graduation de codage, pendant une faible durée d'enclenchement, au moins un condensateur (3) étant monté en parallèle avec les utilisateurs (1), caractérisé par le fait qu'afin de transformer des impulsions de courant élevées de courte durée en impulsions faibles de longue durée, une résistance (4) est reliée en série avec un montage en parallèle constitué du condensateur (3) et d'un montage en série regroupant les charges (1) et un élément de commutation (2), et que l'élément de commutation (2) est commandé par un calculateur par l'intermédiaire d'un élément de temporisation (8).

2. Dispositif selon la revendication 1, caractérisé par le fait que l'élément de commutation (2) forme avec une résistance (7) une source de courant constant commutable.

3. Dispositif selon la revendication 1, caractérisé par le fait que les charges (1) consistent en des diodes électroluminescentes.

4. Dispositif selon la revendication 1 ou 2, caractérisé par le fait que l'élément de commutation (2) est formé par un transistor.